# EUROPEAN PATENT APPLICATION

(11) **EP 4 564 190 A1**
(43) Date of publication of application: **04.06.2025**
(21) Application number: 24208945.6
(22) Date of filing: 25.10.2024
(51) Int. Cl.: G06F 16/3329, G06F 16/906

(54) **ARTIFICIAL INTELLIGENCE-DRIVEN DATA CLASSIFICATION**

(30) Priority: 29.11.2023 US 202318522866
(71) Applicant: SAP SE, 69190 Walldorf (DE)
(72) Inventor: Scherle, Dennis, 69190 Walldorf (DE)
(74) Representative: Müller-Boré & Partner Patentanwälte PartG mbB

(57) **Abstract**

Systems and methods described herein relate to artificial intelligence-driven data classification. Process metadata of an automated process associated with a process design application is accessed. The process metadata includes a plurality of attributes. Prompt data is generated by adding an instruction to the process metadata. The instruction includes at least one request to classify the plurality of attributes according to a predetermined classification scheme. The prompt data is provided to a machine learning model to obtain output. The output includes a classification result for each of the plurality of attributes that is based on the predetermined classification scheme. The classification results are stored in association with the automated process. One or more of the classification results are presented in a user interface.

## Description

### TECHNICAL FIELD

The subject matter disclosed herein relates generally to the classification of process metadata, such as attributes to be used in an automated process. More specifically, but not exclusively, the subject matter relates to the use of artificial intelligence (AI) technology to automate or improve the classification of process metadata, and to the downstream use of such classifications.

### BACKGROUND

Various process design applications exist for modeling and automating business processes (or parts thereof). For example, a process design application may provide a user-friendly software tool that assists a user in modeling and automating a loan application process, a human resources process (e.g., an employee leave request workflow or an employee onboarding sequence), an order processing workflow, or an accounting workflow.

A user typically has to define multiple attributes that characterize properties of each process instance. For example, in the case of a loan application, the user can define attributes, such as "name," "address," and "loan_amount," and define a data type (e.g., "string" or "double") for each attribute. Furthermore, a user may need to classify the attributes to ensure that they are properly handled once the process is implemented. For example, the user reviews and manually classifies each attribute to indicate whether the attribute contains personal data, or to specify a category of the attribute (e.g., "free text," "numerical," or "categorical") for downstream use. Manual classification of attributes can be a tedious, error-prone, or inefficient approach, and may lead to inconsistencies between users or process instances.

### BRIEF DESCRIPTION OF THE DRAWINGS

Some examples are shown for purposes of illustration and not limitation in the figures of the accompanying drawings. In the drawings, which are not necessarily drawn to scale, like numerals may describe similar components in different views or examples. To identify the discussion of any particular element or act more easily, the most significant digit or digits in a reference number refer to the figure number in which that element is first introduced.
FIG. 1 is a diagrammatic representation of a network environment that includes a process design application and a data classification system, according to some examples.
FIG. 2 is a block diagram of certain components of a data classification system, according to some examples.
FIG. 3 is a flowchart illustrating operations of a method suitable for classifying process metadata associated with an automated process to flag personal data attributes, according to some examples.
FIG. 4 is a flowchart illustrating operations of a method suitable for classifying process metadata associated with an automated process to identify attribute categories, and for using classification results to train a machine learning model, according to some examples.
FIG. 5 diagrammatically illustrates interactions between a machine learning model, a data classification system, a process design application, and a user device to present classification results in a user interface, according to some examples.
FIG. 6 diagrammatically illustrates training and use of a machine learning program, according to some examples.
FIG. 7 is a block diagram showing a software architecture for a computing device, according to some examples.
FIG. 8 is a block diagram of a machine in the form of a computer system, according to some examples, within which instructions may be executed for causing the machine to perform any one or more of the methodologies discussed herein.

### DETAILED DESCRIPTION

As used herein, the term "automated process" refers to a workflow, sequence, or set of tasks that is (partially or fully) executed automatically by a computer system. An automated process may utilize rules, application logic, "bots," or other features to complete certain steps without human input or intervention. An automated process may include a combination of automated and human operations (e.g., user input may be obtained to execute certain tasks in the automated process).

Furthermore, as used herein, the term "automated process" may refer to a process that has already been automated or a process that is being automated (e.g., a design or development phase is in progress). In a business process context, non-limiting examples of processes that can be automated include loan applications, claim processing, human resources processes, order processing workflows, or accounting workflows. While automated business processes are described herein to illustrate examples, it will be appreciated that features described herein may also be applied to or integrated with other types of automated processes.

As used herein, the term "process metadata" refers to data that identifies, defines, or describes one or more aspects of an automated process. Process metadata may describe data attributes, such as attribute names, data types, allowed values, or relationships between different attributes. Process metadata may provide a schema that defines one or more inputs, outputs, and variables used within a given process. For example, in the case of a loan application, attribute names such as "name," "address," and "loan_amount," can be defined, together with a data type (e.g., "string" or "double") for each attribute. The process metadata may thus provide context with respect to the automated process, its attributes, or its operations. Process metadata may also be referred to as the "context data" of a process.

While automating a business process can improve efficiency, reduce errors, or standardize operations, process design tools may be technically deficient in that they are unable to classify certain process metadata, requiring manual review and selections. Examples described herein may improve the functioning of a process design tool by enabling automatic classification of process metadata, such as attributes of an automated process.

Examples described herein utilize machine learning models, such as generative models, to classify process metadata. In some examples, personal data attributes within process metadata may be automatically flagged to facilitate compliance with data privacy regulations (e.g., the European Union's General Data Protection Regulation (GDPR) or similar regulations in other territories). In some examples, attributes are automatically categorized based on predetermined machine learning categories such that the categorized attributes can be efficiently fed to a downstream machine learning pipeline. In this way, AI functionality may be more easily integrated into an automated process.

In some examples, a machine learning model, such as a large language model (LLM), is integrated with (e.g., communicatively coupled to) a process design application to allow a process designer to obtain automatic process metadata classifications. As used herein, the term "process design application" refers to a software tool, platform, or service that a user can access and use to model, design, configure, or deploy automated processes. For example, a process design application may provide a graphical user interface for administrators or process designers to map process flows, define logic, integrate systems, or set attributes and execution parameters.

A method may include accessing process metadata of an automated process. The automated process may be associated with a process design application (e.g., the automated process may be designed or developed, or in the process of being designed or developed, by a user using the process design application).

The process metadata may include a plurality of attributes. For example, each attribute may have at least an attribute name and an attribute data type. The process metadata may be received from a user device. In some examples, the process metadata is contained in a scheme file (e.g., a scheme file containing the attributes in a JavaScript Object Notation (JSON) object structure).

The method may include generating prompt data that includes the process metadata and an instruction. For example, the prompt data may be generated by adding, to the process metadata, a predetermined or static instruction comprising at least one request to classify the plurality of attributes according to a predetermined classification scheme.

The classification scheme may be used to guide or indicate to a machine learning model how to classify the process metadata. For example, the classification scheme may indicate that each attribute should be classified as either being a personal data attribute or not being a personal data attribute. Alternatively or additionally, the classification scheme may indicate that each attribute should be classified into one of a set of predetermined categories (e.g., "text," "numerical," "categorical," or "date"). The classification scheme may provide a standardized taxonomy to categorize items using consistent labels across different automated processes (e.g., within an organization). The instruction may thus include or reference the predetermined classification scheme.

The method may include providing or transmitting the prompt data to the machine learning model to obtain output comprising, for each of the plurality of attributes, a classification result. The classification result may include a personal data indicator that indicates whether the attribute is a personal data attribute. The classification result may include a category of the attribute as identified by the machine learning model (e.g., from among a plurality of data candidate categories included in the prompt data). Non-limiting examples of such categories include "numerical," "text," "categorical," "date," or "time."

Once the output has been obtained from the machine learning model, the classification results may be stored in association with the automated process. For example the classification results are stored in a database in association with an identifier of the automated process or in association with identifiers of their respective attributes. A data enrichment operation may be performed to add one or more of the personal data indicators to the process metadata. For example, the original process metadata can be enriched with classifications generated by the machine learning model and subsequently used when the automated process is deployed within a runtime environment. A data filtering operation may be performed to filter process metadata based on the personal data indicators.

In some examples, the machine learning model that generates the classification results is a first machine learning model (e.g., a trained LLM or a trained classifier model), and the method involves a second machine learning model that is trained using a training data set that benefits from the classification results. The training data set may benefit from the classification results in one or more ways. For example, the training data set may include the process metadata together with categories for attributes within the process metadata as generated by the first machine learning model. As another example, the training data set may include process metadata that has been filtered based on personal data attributes as generated by the first machine learning model (e.g., personal data is automatically filtered from original process metadata using the classification results of the first machine learning model). In some examples, the training data may benefit from the classification results both via filtering (e.g., removal of personal data attributes) and enrichment (e.g., addition of categories).

The method may include accessing a first data set and identifying, in the first data set, a target attribute from among the plurality of attributes, where the personal data indicator corresponding to the target attribute indicates that the target attribute is a personal data attribute. For example, the first data set may include a "name" attribute or values for the "name" attribute (or both). The method may include performing a data filtering operation to remove the target attribute (e.g., the attribute and instances or values thereof) from the first data set to obtain a second data set to be used as a training data set. The second machine learning model may then be trained on the (filtered or redacted) training data set after performing the data filtering operation. Data filtering operations may improve or facilitate data privacy compliance.

In some examples, the method includes accessing a training data set for the second machine learning model, which training data set comprises the plurality of attributes processed and categorized by the first machine learning model. A data enrichment operation may be performed to add the categories identified by the first machine learning model to a first data set that comprises the process metadata, or to categorize (e.g., arrange) the first data set based on the categories to obtain a second data set that is used as the training data set. The second machine learning model may then be trained on the (enriched or categorized) training data set. This may allow for easier integration of machine learning applications within an automated process. For example, the automated process can be an automated workflow used to facilitate a business process, such as a loan application. The attributes defined within the particular automated process (e.g., automated loan application) may be automatically classified into machine learning-specific categories to allow for machine learning model generation without requiring significant further user intervention or data manipulation. For example, various attributes of the automated loan application (e.g., "loan_amount" and "employment_status") as selected by a process designer can be automatically classified, and the classifications can be used to train a model that predicts a credit status or whether an applicant qualifies for a loan. This model can then be integrated into the automated loan application to make it more useful and efficient.

In some examples, a training data set may benefit from both the personal data indicators (e.g., for filtering out personal data) and categorizations (e.g., where the categories fed to the first machine learning model align with those required for machine l earning model generation). In this way, technical problems associated with a lack of classification capabilities and technical problems associated with the presence of personal data in larger data sets may be solved in the same process.

The method may include causing presentation of one or more of the classification results in a user interface. The user interface may be a graphical user interface of the process design application. In some examples, the process metadata (e.g., attribute names and attribute data types) is received, via the user interface, from a user device associated with a user of the process design application.

In some examples, a classification adjustment element may be presented in the user interface in association with the classification result obtained for a specific attribute. The classification adjustment element may allow a user to adjust or override a classification result generated by the machine learning model.

The request included in the prompt data may include a predetermined message (e.g., a static system message) that instructs the machine learning model with respect to its task. The request may also specify a format or structure in which to return output. In this way, a system as described herein may allow for consistent answers and a uniform return structure (e.g., to enable outputs to be programmatically consumed by the process design application).

Accordingly, the instruction included in the prompt data may identify a data structure for returning the classification results, with the output automatically being structured according to the identified data structure. The method may include providing the process design application with programmatic access to the output to integrate the classification results into the automated process (e.g., to allow the personal data indicators to be automatically applied when the automated process runs). The data structure may, for example, be a JSON object structure. In some examples, the personal data indicators generated by the machine learning model are integrated into the process metadata of the automated process. The personal data indicators may be used to perform a data filtering operation (e.g., at runtime).

Examples described herein may address or alleviate technical problems, such as inefficient and error-prone classification of process metadata. For example, instead of requiring an administrator or process designer to inspect attributes manually and assign classifications, the functioning of a computer system that implements a process design application can be improved by providing automatic classification capabilities (e.g., by leveraging an LLM). This may enhance the efficiency, speed, or accuracy of a process design application, or allow users to leverage such tools in a more powerful manner.

Furthermore, examples described herein may address or alleviate the inability to leverage AI capabilities in process automation by improving data structuring or data formatting. For example, a traditional machine learning pipeline system may require extensive preprocessing of attribute classifications before such classifications can be used in model generation or training. Examples described herein may streamline such processes by automatically classifying attributes based on a classification scheme that is designed for AI integration. This may improve system interoperability and allow AI functions to be more easily incorporated into a process design application.

Examples described herein may provide a technical solution for facilitating compliance with data privacy regulations without requiring significant manual intervention. For example, by automatically flagging attributes that potentially contain personal data and performing data filtering operations, a system may enhance compliance and reduce privacy risks. Improved technical accuracy may also enable processes to safely and correctly utilize or accept personal data attributes rather than having to prohibit their use entirely.

When the effects in this disclosure are considered in aggregate, one or more of the methodologies described herein may obviate a need for certain efforts or resources that otherwise would be involved in the implementation of process design applications, such as in the integration of AI functionality into a process design application. Computing resources utilized by systems, databases, or networks may be more efficiently utilized or reduced (e.g., as a result of the automatic generation of accurate and appropriately structured classification results). Examples of such computing resources may include processor cycles, network traffic, memory usage, data storage capacity, power consumption, and cooling capacity.

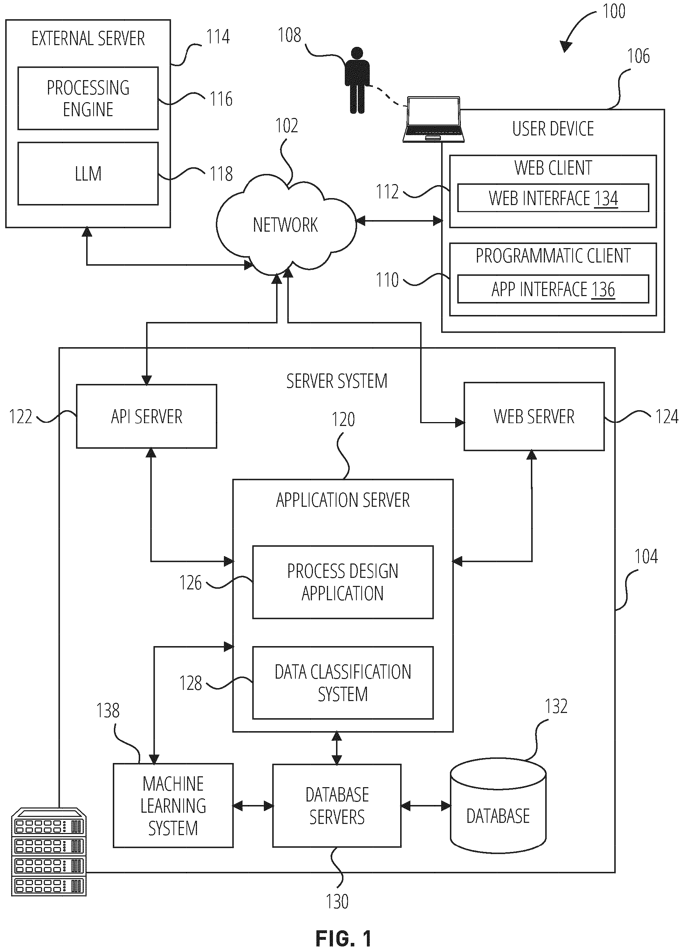

FIG. 1 is a diagrammatic representation of a networked computing environment 100 in which some examples of the present disclosure may be implemented or deployed. One or more servers in a server system 104 provide server-side functionality via a network 102 to a networked device, in the example form of a user device 106 that is accessed by a user 108. A web client 112 (e.g., a browser) or a programmatic client 110 (e.g., an "app") may be hosted and executed on the user device 106.

An Application Program Interface (API) server 122 and a web server 124 provide respective programmatic and web interfaces to components of the server system 104. A specific application server 120 hosts a process design application 126 and a data classification system 128, which each include components, modules, or applications. It will be appreciated that the process design application 126 and the data classification system 128 may be hosted on different application servers in other examples.

The user device 106 can communicate with the application server 120, e.g., via the web interface supported by the web server 124 or via the programmatic interface provided by the API server 122. It will be appreciated that, although only a single user device 106 is shown in FIG. 1, a plurality of user devices may be communicatively coupled to the server system 104 in some examples. For example, multiple users may access the process design application 126 using respective user devices to utilize its functionality. Further, while certain functions may be described herein as being performed at either the user device 106 (e.g., web client 112 or programmatic client 110) or the server system 104, the location of certain functionality either within the user device 106 or the server system 104 may be a design choice.

The application server 120 is communicatively coupled to database servers 130, facilitating access to one or more information storage repository, e.g., a database 132. In some examples, the database 132 includes storage devices that store information to be processed by the process design application 126, the data classification system 128, or other components shown in FIG. 1. For example, the database 132 may store scheme files with attribute details of attributes used in an automated process, as well as values for such attributes obtained at runtime. The database 132 may also store machine learning-related data, such as training data sets utilized by a machine learning system 138.

The application server 120 accesses application data (e.g., application data stored by the database servers 130) to provide one or more applications or software tools to the user device 106 via a web interface 134 or an app interface 136. The process design application 126 and the data classification system 128 are examples of such applications or tools, and are described below.

The process design application 126 provides an environment for process designers, developers, or administrators to design, manage, and deploy process workflows. It enables configuring tasks, mapping data, defining process logic, etc. For example, the process design application 126 may provide a user-friendly graphical user interface at the user device 106 to allow the user 108 to construct and edit automated processes (e.g., by using template flows, selecting template elements, creating workflow objects, or using drag-and-drop construction). At least some functionality of the process design application 126 may be provided at the user device 106 (e.g., at the web client 112).

The data classification system 128 is configured to classify or categorize process metadata relating to an automated process. In some examples, the data classification system 128 is integrated with the process design application 126 to enable users of the process design application 126 to more easily build, configure, or deploy automated processes.

The data classification system 128 utilizes one or more machine learning models to generate classification results. For example, a machine learning model may be hosted on an external server 114 that provides a processing engine 116 and a trained model, such as an LLM 118, as shown in FIG. 1. However, in other examples, the machine learning model that generates the classification results may be internally hosted (e.g., part of the machine learning system 138 within the server system 104).

In some examples, the machine learning system 138 provides machine learning pipelines and models used for generating predictions within automated processes (e.g., to generate a credit score for a loan applicant or to provide predictive analytics in an automated loan application process). The machine learning system 138 may provide various capabilities, such as training models, deploying predictions, and monitoring performance. In some examples, and as is further described below, the data classification system 128 integrates with the machine learning system 138 to facilitate or improve a machine learning pipeline (e.g., by formatting or structuring process metadata as needed for machine learning).

The machine learning system 138 may provide automated machine learning capabilities that can generate pipelines tailored to a given process. The machine learning system 138 may evaluate target process metadata and classified attributes to determine aspects such as the appropriate data preprocessing, feature engineering, model algorithms, and hyperparameters to use.

The machine learning system 138 may leverage training data sets (e.g., stored in the database 132) to intelligently construct a custom machine learning pipeline for a process context. The pipeline provided by the machine learning system 138 may then be used to train, evaluate, and select a model for deployment (e.g., for deployment as part of an automated process designed in the process design application 126). This automation may eliminate or reduce the need for time-consuming manual development or refinement of machine learning solutions. By integrating the data classification system 128 with the machine learning system 138, in some examples, the machine learning system 138 may be enabled to ingest attributes and directly construct a tailored pipeline optimized for the relevant data types and process obj ectives.

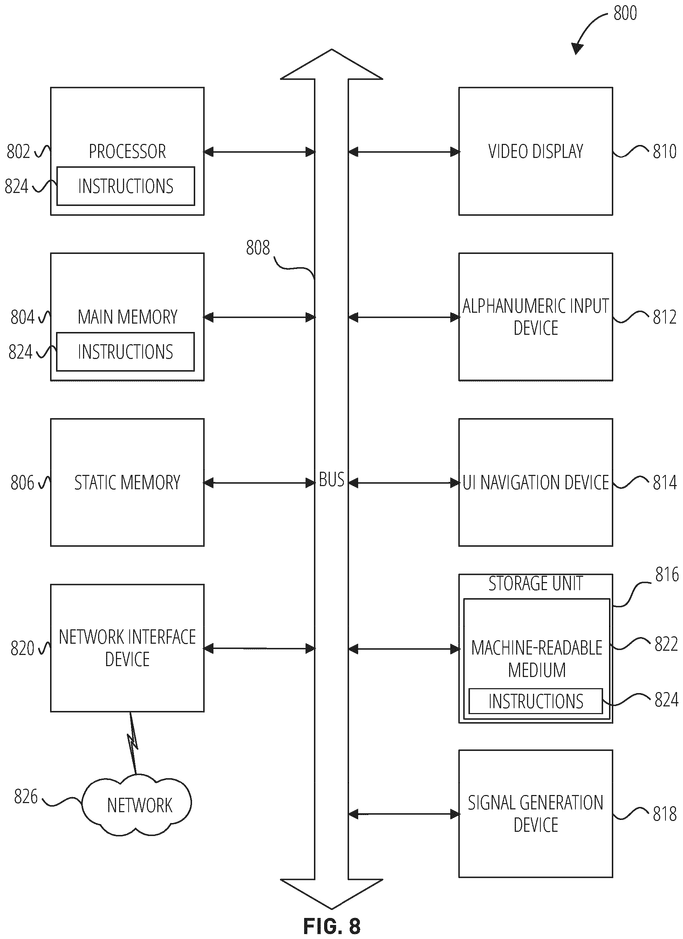

In some examples, the application server 120 is part of a cloud-based platform provided by a software provider that allows the user 108 to utilize the tools or features of the process design application 126 or the data classification system 128. One or more of the application server 120, the database servers 130, the API server 122, the web server 124, the process design application 126, and the data classification system 128 may each be implemented in a computer system, in whole or in part, as described below with respect to FIG. 8.

In some examples, external applications (which may be third-party applications), such as applications executing on the external server 114, can communicate with the application server 120 via the programmatic interface provided by the API server 122. For example, a third-party application may support one or more features or functions on a website or platform hosted by a third party, or may perform certain methodologies and provide input or output information to the application server 120 for further processing or publication.

Referring more specifically now to the external server 114, the external server 114 houses the LLM 118 and related processing capabilities. The external server 114 may provide an external, scalable server environment dedicated to running and serving queries to the LLM 118.

The LLM 118 may be a computational model developed for the tasks of processing, generating, and understanding human language (and other inputs, such as structured data or code). It employs machine learning methodologies, including deep learning architectures. The training of the LLM 118 may utilize comprehensive data sets, such as vast data sets of textual content, to enable the LLM 118 to recognize patterns in human language or other text. The LLM 118 may be built upon a neural network framework, such as the transformer architecture. The LLM 118 may contain a significant number of parameters (e.g., in excess of a billion) which are adjusted during training to optimize performance.

The processing engine 116 may be a component running on the external server 114 that is communicatively coupled to the LLM 118. The processing engine 116 may handle certain preprocessing of data before sending it to the LLM 118 and certain postprocessing of the responses received from the LLM 118. For preprocessing, the processing engine 116 may tokenize, compress, or format the data to optimize it for the LLM 118. For postprocessing, it may format the LLM 118 response, perform detokenization or decompressi on, and prepare the response for sending back to the requesting system (e.g., the data classification system 128).

The LLM 118 may provide natural language processing capabilities that enable it to respond to various queries. Specifically, the LLM 118 may process a prompt provided by the data classification system 128 and automatically classify attributes included in the prompt. For example, the LLM 118 may consider the attribute name and data type of a given attribute, and return, as output, a personal data indicator (indicating whether the attribute is considered to be personal data) and a category (indicating in which of a plurality of predefined categories the attribute is considered to fall). In some examples, the LLM 118 has been fine-tuned on classification tasks relating to process metadata to enhance its ability to provide useful results. For example, the LLM 118 may be fine-tuned to focus specifically on requests to classify attributes of an automated business process and to deal with inputs in a particular format (e.g., scheme files that present attributes in JSON format).

The data classification system 128 may thus integrate with the LLM 118 to leverage its capabilities. While the LLM 118 is used as an example of a machine learning model in this disclosure, it is noted that other types of models may also be used to classify or categorize process metadata (e.g., a trained classifier model).

The network 102 may be any network that enables communication between or among machines, databases, and devices. Accordingly, the network 102 may be a wired network, a wireless network (e.g., a mobile or cellular network), or any suitable combination thereof. The network 102 may include one or more portions that constitute a private network, a public network (e.g., the Internet), or any suitable combination thereof.

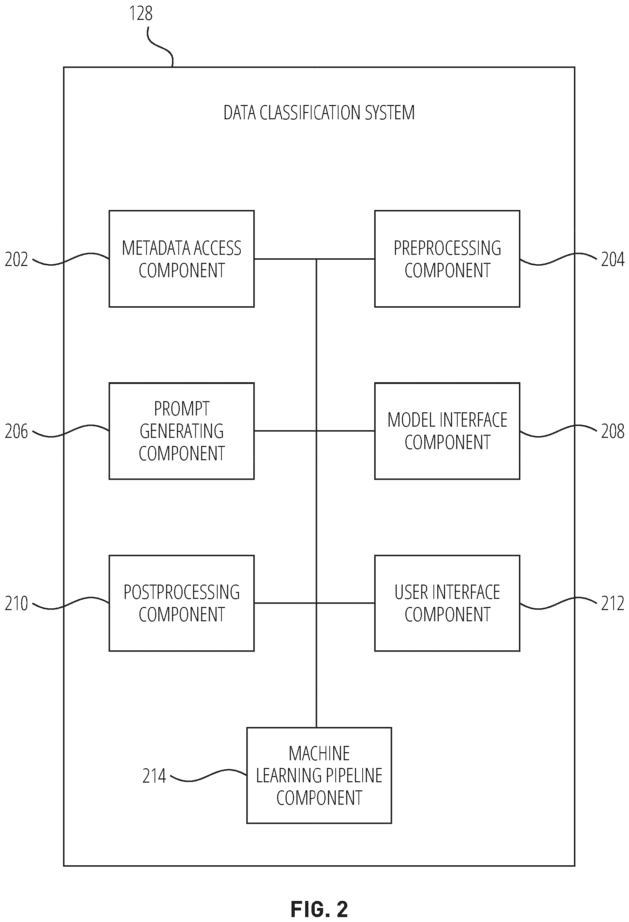

FIG. 2 is a block diagram illustrating certain components of the data classification system 128 of FIG. 1, according to some examples. The data classification system 128 is shown to include a metadata access component 202, a preprocessing component 204, a prompt generating component 206, a model interface component 208, a postprocessing component 210, a user interface component 212, and a machine learning pipeline component 214.

The metadata access component 202 accesses or retrieves process metadata to be analyzed by the LLM 118. For example, the metadata access component 202 may access a scheme file that contains the process metadata (e.g., select a scheme file that is stored in association with an identifier of a particular automated process). In some examples, the process metadata items are input by the user 108 using the user device 106. The metadata access component 202 may retrieve the process metadata from a storage location, such as the database 132 of FIG. 1.

The preprocessing component 204 is responsible for preprocessing process metadata. For example, the preprocessing component 204 may extract the relevant attributes from a scheme file, normalize data, handle missing values, or transform the metadata into a format required by a model.

The prompt generating component 206 dynamically creates prompt data to be provided to the LLM 118. For example, the prompt generating component 206 may add a natural language instruction stored in the database 132 to the process metadata to provide a task, a role, constraints, or additional context to the LLM 118. In some examples, the prompt generating component 206 is configured to generate prompts in a standardized structure and wording to promote consistent model outputs across different automated processes.

In some examples, the prompt generating component 206 adds an instruction to classify the process metadata according to a predetermined classification scheme. For example, the classification scheme may specify categories, such as "numerical," "text," "categorical," "date," or "time," that are used to classify attributes of an automated process. In some cases, the classification scheme may specify that attributes are to be labeled or flagged based on whether they meet a certain requirement, such as containing or being linked to personal data. The classification scheme (or another part of the instruction in the prompt data) may also specify a desired output format or structure for responses from the LLM 118. The classification scheme may thus provide a common "vocabulary" for the machine learning model to use when classifying the attributes. The results are output using categories and labels as defined in the classification scheme.

The model interface component 208 provides an interface between the process metadata and the LLM 118. The model interface component 208 may be responsible for transmitting prompt data to the LLM 118 and receiving outputs with classification results in response thereto.

In some examples, the postprocessing component 210 postprocesses "raw" classification outputs from the LLM 118. For example, the postprocessing component 210 may validate model output by checking whether the output has an expected structure (e.g., JSON object structure) and contains expected responses (e.g., a classification for each attribute in the prompt data). The postprocessing component 210 may be configured to resolve issues, such as missing data, and may format classifications into required data structures (e.g., in examples where the LLM 118 does not return an output in a format required by the process design application 126 or the machine learning system 138).

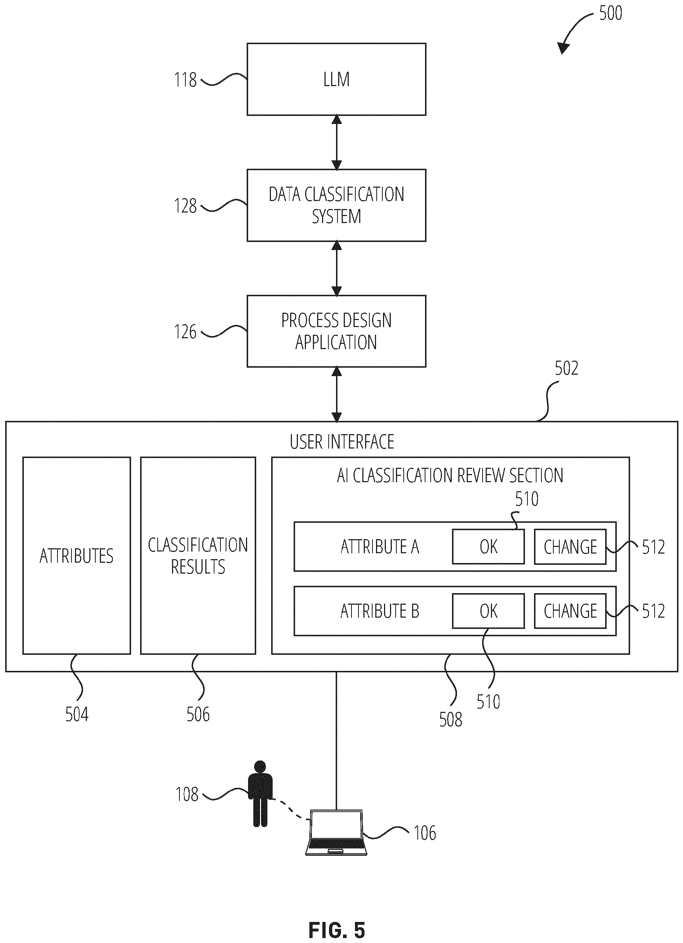

The user interface component 212 handles interactions with a device of a user of the process design application 126, such as the user 108 of FIG. 1. The user interface component 212 may provide a graphical user interface for the user to request AI classifications, or for the user to review, validate, adjust, or override AI-generated classifications. Examples are described in more detail with reference to FIG. 5.

The machine learning pipeline component 214 may be responsible for preparing, curating, or managing data sets used to train one or more machine learning models. The machine learning pipeline component 214 may interface with the machine learning system 138. In some examples, the machine learning pipeline component 214 forms part of the machine learning system 138. The machine learning pipeline component 214 may, for example, use classifications generated by the LLM 118 to filter training data, to enrich training data, to organize or categorize training data, or combinations thereof.

In some examples, at least some of the components shown in FIG. 1 or FIG. 2 are configured to communicate with each other to implement aspects described herein. One or more of the components described herein may be implemented using hardware (e.g., one or more processors of one or more machines) or a combination of hardware and software. For example, a component described herein may be implemented by a processor configured to perform the operations described herein for that component. Moreover, two or more of these components may be combined into a single component, or the functions described herein for a single component may be subdivided among multiple components. Furthermore, according to various examples, components described herein may be implemented using a single machine, database, or device, or be distributed across multiple machines, databases, or devices.

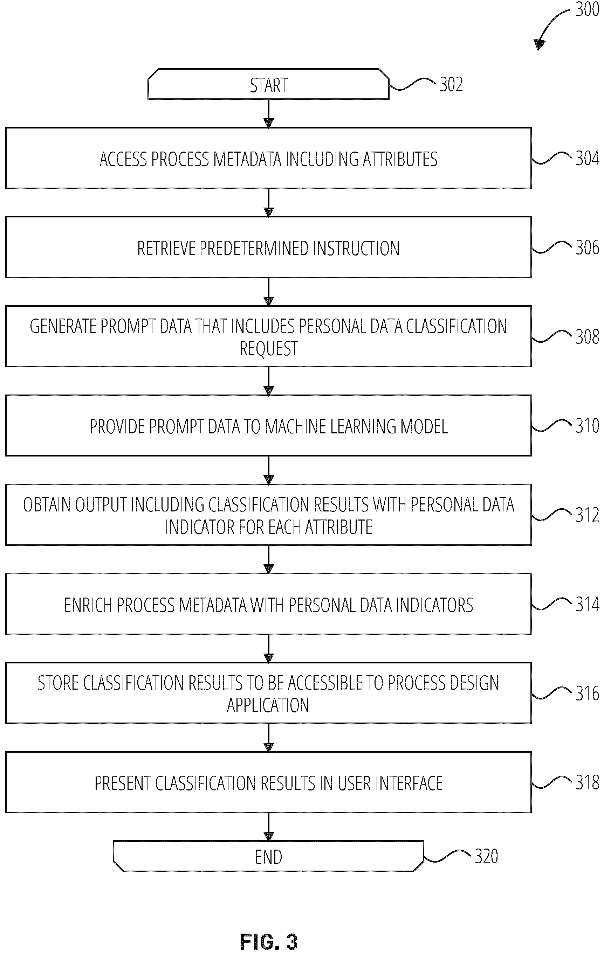

FIG. 3 is a flowchart illustrating operations of a method 300 suitable for classifying process metadata associated with an automated process to flag personal data attributes, according to some examples. By way of example and not limitation, aspects of the method 300 may be performed by the components, devices, systems, network, or database shown in FIG. 1 and FIG. 2.

As mentioned, the user 108 may utilize the user device 106 to access the process design application 126. For example, the user 108 may design and deploy an automated business process, such as an automated loan application process, using the process design application 126. The user 108 may design different paths, routes, or journeys, at least some aspects of which are automated. Aspects of the loan application process, such as verification of input data from an applicant, or checking of market information, may be automated as part of the automated process in the context of the process design application 126. In this context, the user 108 may be referred to as an administrator or process designer.

During a design process (e.g., during design-time operations), the user 108 defines process metadata (which may also be referred to as "context data"), including various attributes that will be used within the automated process. The process design application 126 may store the attributes in the database 132. For example, a scheme file containing the attributes may include attribute names and attribute data types, as shown below for an exemplary loan application process. The example below is simplified, and it will be appreciated that the scheme file may include many more attributes, as well as other metadata.

```
  Loan classification
  {
  "name": "STRING",
  "lastName": "STRING",
  "age": "INT",
  "amount": "DOUBLE",
  "address": "STRING",
  "marriageState": "STRING"
  ...
  }
```

Turning now specifically to FIG. 3, the method 300 commences at opening loop element 302, and proceeds to operation 304 where the data classification system 128 accesses process metadata including attributes. For example, the data classification system 128 accesses (e.g., using the metadata access component 202) the scheme file that contains process metadata for the loan application process.

At operation 306, the data classification system 128 retrieves a predetermined instruction to be added to the process metadata (e.g., using the prompt generating component 206 to select retrieve the instruction from the database 132). The data classificati on system 128 then uses the prompt generating component 206 to generate prompt data that includes a personal data classification request at operation 308. For example, the data classification system 128 may generate prompt data that includes the process metadata for the loan application process, as well as the predetermined instruction, which in this case is a request to identify whether each attribute is a personal data attribute. The prompt data may also include further contextual or instructing information, such as an indication of the role of the LLM 118 or the purpose of the task (e.g., to correctly classify attributes for a business process).

The prompt data is transmitted to the LLM 118 at operation 310. For example, the prompt data is transmitted to the external server 114 by the model interface component 208 of the data classification system 128 for processing by the LLM 118. In some examples, the process metadata and additional information (e.g., instruction or contextual information) are provided as a single set of prompt data (e.g., a single, consolidated input prompt). In other examples, certain items in the prompt data may be provided separately. For example, a text instruction can be provided specifically as a "prompt," while the process metadata is provided separately to support the prompt. This may facilitate the efficient transmission of follow-up prompts, where the LLM 118 can use the previously submitted process metadata and predetermined instructions and receive a new (follow-up) prompt after responding to a first request.

Accordingly, in some examples, the LLM 118 may encode respective input items into separate vector representations, and then analyze the vector representations together to provide a response that addresses the relevant request, but is influenced or guided by the additional data (e.g., process metadata, instructions, or other context). An output vector may be decoded into natural language text by the LLM 118 and provided as the response.

For example, the external server 114 receives the prompt data and uses the LLM 118 to process the prompt data. A response is generated at the external server 114 and then transmitted back to the data classification system 128. The method 300 proceeds to operation 312, where the data classification system 128 obtains (e.g., receives) the output from the LLM 118.

As mentioned, the prompt data may specify that the output should be formatted or arranged in a specific structure, such as a JSON object structure. An example of output received at the data classification system 128 is shown below, again in the context of the loan application process. In the example below, the LLM 118 generated a personal data indicator for each attribute. For example, for the attribute "name," based on the name of the attribute and the data type "STRING," the LLM 118 determined the attribute to be personal data. On the other hand, for the attribute "amount," based on the name of the attribute and the data type "DOUBLE," the LLM 118 determined the attribute to be non-personal data. These personal data indicators are examples of respective classification results for the attributes.

```
  OUTPUT
  {
  "name": {
  "personalData":"YES",
  },
  "lastName": {
  "personalData":"YES",
  },
  "age": {
  "personalData":"NO",
  },
  "amount":{
  "personalData":"NO",
  },
  "address":{
  "personalData":"YES",
  },
  "marriageState":{
  "personalData":"NO",
  }
  }
```

In the above example, there is not a one-to-one mapping between the original data type of the attribute within the process metadata and whether it contains personal data. For example, the attributes "lastName" and "marriageState" are both of type "STRING," but only one is classified as personal data. Accordingly, the LLM 118 may be able to perform relatively non-trivial classifications in a quick and efficient manner.

The data classification system 128 enables the process design application 126 to automatically classify attributes in terms of whether they may include personal data, thereby improving process design efficiency and accuracy. Once the classification results have been obtained, the process metadata may be enriched with the classification results (e.g., by adding the personal data indicators to metadata of each attribute) at operation 314.

The classification results may be stored to be accessible to the process design application 126 at operation 316. For example, the process design application 126 or the automated process may utilize the enriched process metadata at runtime to ensure that personal data is appropriately handled. For example, the process design application 126 or the automated process may dynamically remove certain entries from fields (e.g., attribute values) that could constitute personal information to avoid any breaches or non-compliance from a data privacy regulation perspective.

In some examples, the classification results may also be used for other purposes, such as in a machine learning pipeline via the machine learning pipeline component 214. For example, data fields (e.g., attributes) that are flagged as personal data by the LLM 118 may be filtered from a training data set and thus excluded from a machine learning model that is trained to perform predictions within, or associated with, the relevant automated process. For example, it may be undesirable to utilize personal data in machine learning training, and such an automatic data filtering operation may reduce or eliminate the need for an administrator to manually remove personal data from a training data set. The method 300 may thus include automatically forwarding classification results to the machine learning system 138 of FIG. 1 for use in a machine learning pipeline.

At operation 318 of the method 300, the classification results are presented in a user interface using the user interface component 212 of the data classification system 128. For example, the user 108 may be presented with the classification results for review or validation in a user interface provided at the user device 106. The method 300 concludes at closing loop element 320.

Examples described herein may significantly reduce effort on the part of a human administrator or process designer, while improving the functioning of a computer system that executes the process design application 126 (e.g., as a result of enhanced accuracy and a reduction in the number of user selections required). Where an LLM is used, the broad, general knowledge of the LLM may enable it to generate accurate classifications. For example, where an organization has created multiple automated processes, the method 300 of FIG. 3 may be applied with the LLM 118 to the attributes of each automated process to flag, enrich, or filter data as needed (e.g., to comply with data privacy regulations) without requiring the administrator to manually review each automated process.

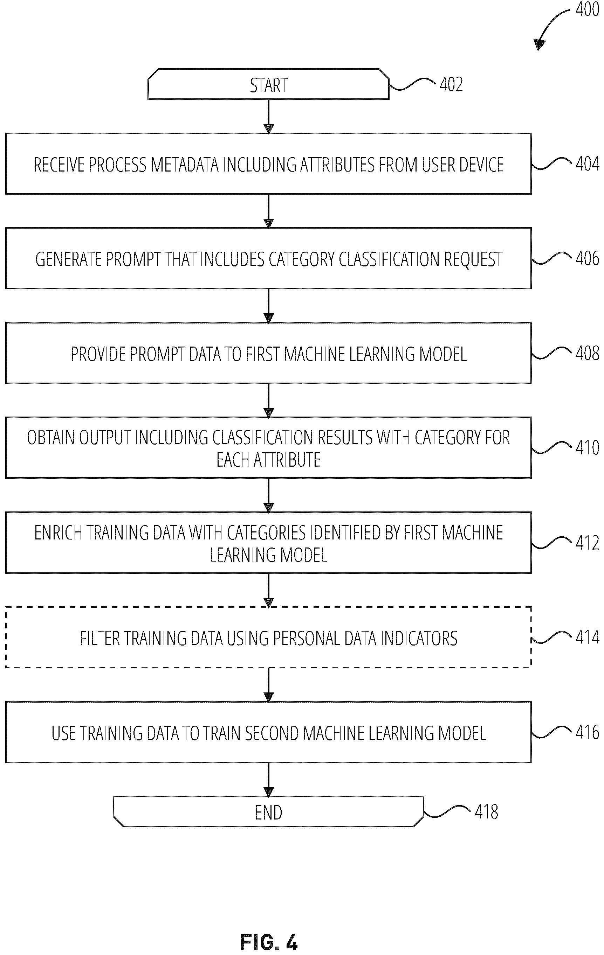

FIG. 4 is a flowchart illustrating operations of a method 400 suitable for classifying process metadata associated with an automated process to identify attribute categories, and for using classification results to train a machine learning model, according to some examples. By way of example and not limitation, aspects of the method 400 may be performed by the components, devices, systems, network, or database shown in FIG. 1 and FIG. 2.

The method 400 commences at opening loop element 402 and proceeds to operation 404, where the data classification system 128 receives process metadata including attributes from the user device 106. For example, the user 108 may access the process design application 126 and input or select attribute details, such as attribute names and data types, in the context of an automated process. The data classification system 128 then receives the process metadata from the process design application 126. In some examples, the data classification system 128 may retrieve the process metadata from a storage component, such as the database 132 of FIG. 1.

At operation 406, the data classification system 128 generates prompt data. For example, the data classification system 128 retrieves a predetermined instruction to be added to the process metadata (e.g., using the prompt generating component 206). The data classification system 128 then uses the prompt generating component 206 to generate prompt data that includes a category classification request. In other words, in the case of FIG. 4, the predetermined instruction includes a request to select a category for each attribute.

For example, the data classification system 128 may generate prompt data that includes the process metadata for the loan application process described above, as well as a request to classify each attribute in the process metadata into one of a plurality of candidate data categories based on a classification scheme. The prompt data may also include further contextual or instructing information, such as an indication of the role of the LLM 118 or the purpose of the task.

The prompt data is provided to the LLM 118 at operation 408 (e.g., using the model interface component 208). For example, the prompt data is transmitted to the external server 114 by the data classification system 128, for processing by the LLM 118. As mentioned, in some examples, the process metadata and additional information can be provided as a single set of prompt data, while in other examples, certain items in the prompt data may be provided separately.

An example of an instruction that can be included in prompt data and transmitted to the LLM 118 is provided below:
*"Request: Provide a classification of the following attributes based on these categories: Text, Numerical, and Categorical. Output format: Return a JSON object structure."*

In the above example, the prompt data includes only a request to categorize (e.g., a category classification request). Another example, which also includes a request for personal data classification, is provided below:
*"Request 1: Provide a classification of the following attributes based on these categories: Text, Numerical, and Categorical. Request 2: Also flag the attribute if it could include personal data. Return a JSON object structure."*

The method 400 proceeds to operation 410, where output is received from the LLM 118 at the data classification system 128. For example, where the prompt data includes the category classification request, the output includes a category for each attribute, as identified by the LLM 118. Where the prompt data also includes the personal data classification request, the output further includes a personal data indicator for each attribute, or for those attributes that are determined to be associated with personal data.

An example of output received at the data classification system 128 is shown below, again in the context of the loan application process as a non-limiting example. In the example below, the LLM 118 generated a personal data indicator as well as a category for each attribute. In this case, the category is referred to as a "machine learning classification," since the categories are generated for downstream use in a machine learning pipeline, as is further described below.

```
  OUTPUT
  {
  "name": {
  "personalDataClassification":1,
  "machineLearningClassification":"TEXT"
  },
  "lastname": {
  "personalDataClassification":1,
  "machineLearningClassification":"TEXT"
  },
  "age": {
  "personalDataClassification":0,
  "machineLearningClassification":"NUMERICAL"
  },
  "amount":{
  "personalDataClassification": 0,
  "machineLearningClassification":"NUMERICAL"
  },
  "address":{
  "personalDataClassification": 1,
  "machineLearningClassification":"TEXT"
  },
  "marriageState":{
  "personalDataClassification":0,
  "machineLearningClassification":"CATEGORICAL"
  }
  }
```

The above output is formatted in a JSON object structure as requested in the instruction. The outer JSON object contains keys for each attribute. The value for each key is another JSON object that provides metadata about how that attribute was classified by a machine learning model. Each inner object has two keys:
- *personalDataClassification*: This is a numeric value (0 or 1) indicating if the attribute contains personal data or not. The number 0 means it does not contain personal data, while the number 1 means it does.
- *machineLearningClassification*: This specifies what kind of data the LLM 118 determined the attribute represents, based on the candidate data categories it was provided with.

In the above example, for the attribute "name," based on the name of the attribute and the data type "STRING," the LLM 118 determined the attribute to be personal data (indicated by the number "1") and its category to be "TEXT." For the attribute "amount," based on the name of the attribute and the data type "DOUBLE," the LLM 118 determined the attribute to be non-personal data (indicated by the number "0") and its category to be "NUMERICAL." These personal data indicators and categories are examples of respective classification results for the attributes.

The specified structure allows for easier downstream use of the output data. For example, the output may be fed to the machine learning system 138 and used to enrich or improve training data (operation 412). The LLM 118 may be a first machine learning model, with the training data being used to train a second machine learning model (operation 416). For example, a data enrichment operation may be performed to add the categories identified by the first machine learning model to a data set intended for training the second machine learning model, or to categorize the data based on the categories. As mentioned above, the LLM 118 may be requested to specifically categorize the attributes based on a classification scheme used for machine learning model training. The second machine learning model may then be trained on the (enriched or categorized) training data set.

As indicated by the broken lines in FIG. 4, where the output includes personal data indicators, the personal data indicators may also be used to process the training data prior to training, such as to perform a data filtering operation (operation 414). Accordingly, the method 400 may include accessing a data set intended for training the second machine learning model, and identifying, in the data set, a target attribute from among the plurality of attributes. For example, an attribute (e.g., a field) that was determined by the first machine learning model (e.g., the LLM 118) to contain personal data may be the target attribute. The data classification system 128 or the machine learning system 138 may then perform a data filtering operation to remove the target attribute (e.g., the field and instances or values thereof) from the data set to obtain a suitable training data set.

In some examples, the classification results may be used as context data during machine learning model training. For example, a training data set may include attributes for the loan application process and corresponding training values. The classification results, such as the personal data classifications or the categories generated by the LLM 118, may be provided to the relevant model together with the training data set as context data during training to improve its ultimate performance. The method 400 concludes at closing loop element 418.

Examples described herein may thus facilitate the downstream usage of machine learning functionality in an automated process. For example, automated metadata classification described herein may enable seamless or improved integration of machine learning capabilities into existing and new processes without significant additional effort from administrators. For processes already in production, new AI functionality may be added without requiring manual input or classification of data attributes. This can simplify inclusion of AI features into operational systems. For example, in a loan application process, predictive analytics may be added to estimate default risk based on applicant details. In another example, a natural language processing model may be integrated to analyze supporting documents and extract salient information. The automated classification of process metadata may allow these and other AI capabilities to be easily incorporated into automated processes.

FIG. 5 is a diagram 500 illustrating interactions between a machine learning model, a data classification system, a process design application, and a user device to present classification results in a user interface, according to some examples. By way of example and not limitation, in FIG. 5, the machine learning model, the data classification system, the process design application, and the user device are the LLM 118, the data classification system 128, the process design application 126, and the user device 106 of FIG. 1, respectively.

As described elsewhere, in some examples, the LLM 118 generates classification results with respect to attributes, which are returned to the data classification system 128. The data classification system 128 is integrated with the process design application 126, which provides a user interface 502 at the user device 106 (e.g., via the web client 112 or the programmatic client 110 of FIG. 1).

In some examples, the user 108 creates or defines attributes 504 for an automated process, and requests, via the user interface 502, automatic classification of the attributes 504. In other examples, the data classification system 128 automatically causes classification of the attributes 504 without an explicit user selection or instruction.

Once the data classification system 128 has obtained classification results 506 for the specific set of attributes 504, the classification results 506 are presented in the user interface 502. For example, the attributes 504 may be presented together with their corresponding classifications in a "side-by-side" manner. In the diagram 500 of FIG. 5, the user interface 502 also presents an AI classification review section 508 that enables the user 108 to review and validate or adjust the classification results 506. Specifically, in FIG. 5, the AI classification review section 508 provides, for each attribute, a user-selectable confirmation element 510 and a user-selectable classification adjustment element 512.

For example, if the user 108 is satisfied with the classification results 506 provided by the data classification system 128 for "Attribute A," the user 108 may select the confirmation element 510 next to "Attribute A" to validate the "suggestion" or "prediction" generated by the LLM 118. On the other hand, the user 108 may believe that the classification results 506 generated for "Attribute B" are incorrect, and then select the classification adjustment element 512 next to "Attribute B."

User selection of the classification adjustment element 512 may cause presentation of additional user interface elements, such as elements that allow the user 108 to select a new or different classification, or to void the classification generated by the LLM 118. For example, where the user believes that "Attribute B" was incorrectly flagged as being a personal data attribute, the user may use the user interface 502 to change this classification. In another example, where the user believes that "Attribute B" was incorrectly categorized (e.g., classified as "TEXT" instead of "CATEGORICAL" data), the user may use the user interface 502 to select the more appropriate classification (e.g., select a replacement classification). The process design application 126 may transmit the user selection to the data classification system 128 and the data classification system 128 may, in response to detecting the user selection, adjust the relevant classification result accordingly (e.g., by changing it to a new or replacement classification or deleting the classification, and updating process metadata in the database 132 accordingly).

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: at least one memory that stores instructions; and one or more processors configured by the instructions to perform operations comprising: accessing process metadata of an automated process associated with a process design application, the process metadata comprising a plurality of attributes; generating prompt data by adding, to the process metadata, an instruction comprising at least one request to classify the plurality of attributes according to a predetermined classification scheme; providing the prompt data to a machine learning model to obtain output comprising, for each of the plurality of attributes and based on the predetermined classification scheme, a classification result; and in response to obtaining the output from the machine learning model: storing the classification results in association with the automated process, and causing presentation of one or more of the classification results in a user interface.

In Example 2, the subject matter of Example 1 includes, wherein the process metadata comprises, for each of the plurality of attributes, an attribute name and an attribute data type.

In Example 3, the subject matter of any of Examples 1-2 includes, wherein the at least one request to classify each of the plurality of attributes comprises a first request to identify whether each attribute is a personal data attribute, and the classification result for each attribute comprises a personal data indicator that indicates whether the attribute is a personal data attribute.

In Example 4, the subject matter of Example 3 includes, the operations further comprising: performing a data enrichment operation to add one or more of the personal data indicators to the process metadata.

In Example 5, the subject matter of any of Examples 3-4 includes, wherein the machine learning model is a first machine learning model, the operations further comprising: accessing a first data set comprising the plurality of attributes of the automated process; identifying, in the first data set, a target attribute from among the plurality of attributes , wherein the personal data indicator corresponding to the target attribute indicates that the target attribute is a personal data attribute; performing a data filtering operation to remove the target attribute from the first data set to obtain a second data set, the second data set being a training data set for a second machine learning model; and training the second machine learning model on the training data set.

In Example 6, the subject matter of any of Examples 1-5 includes, wherein the at least one request to classify each of the plurality of attributes comprises a second request to identify a category of each attribute from among a plurality of candidate data categories, the classification result for each attribute comprising the category of the attribute as identified by the machine learning model.

In Example 7, the subject matter of Example 6 includes, wherein the machine learning model is a first machine learning model, the operations further comprising: accessing a first data set comprising the plurality of attributes of the automated process; performing a data enrichment operation to add the categories identified by the first machine learning model to the first data set to obtain a second data set, the second data set being a training data set for a second machine learning model; and training the second machine learning model on the training data set.

In Example 8, the subject matter of Example 7 includes, wherein the at least one request to classify each of the plurality of attributes further comprises a first request to identify whether each attribute is a personal data attribute, the classification result for each attribute comprises a personal data indicator that indicates whether the attribute is a personal data attribute, the operations further comprising: identifying, in the first data set, a target attribute from among the plurality of attributes, wherein the personal data indicator corresponding to the target attribute indicates that the target attribute is a personal data attribute; and performing a data filtering operation to remove the target attribute from the first data set such that the training data set does not include the target attribute.

In Example 9, the subject matter of any of Examples 6-8 includes, wherein the candidate data categories are included in the prompt data, the candidate data categories comprising at least one of: numerical, text, categorical, or date.

In Example 10, the subject matter of any of Examples 1-9 includes, wherein the user interface is a graphical user interface of the process design application, the operations further comprising: receiving, via the user interface, the process metadata from a user device associated with a user of the process design application; causing presentation, in the user interface, of a classification adjustment element in association with the classification result obtained for a first attribute from among the plurality of attributes; detecting user selection of the classification adjustment element; and adjusting the classification result obtained for the first attribute based on the user selection of the classification adjustment element.

In Example 11, the subject matter of Example 10 includes, the operations further comprising: receiving, via the user interface, an additional user selection of a replacement classification for the first attribute, wherein the classification result obtained for the first attribute is adjusted by replacing the classification result with the replacement classification.

In Example 12, the subject matter of any of Examples 1-11 includes, wherein the instruction identifies a data structure for returning the classification results, the output being structured according to the identified data structure, and the operations further comprising: providing the process design application with programmatic access to the output to integrate the classification results into the process metadata of the automated process.

In Example 13, the subject matter of Example 12 includes, wherein the at least one request to classify each of the plurality of attributes comprises a first request to identify whether each attribute is a personal data attribute, the classification result for each attribute comprises a personal data indicator that indicates whether the attribute is a personal data attribute, and the personal data indicators are integrated into the process metadata of the automated process.

In Example 14, the subject matter of any of Examples 12-13 includes, wherein the at least one request to classify each of the plurality of attributes comprises a first request to identify whether each attribute is a personal data attribute, the classification result for each attribute comprises a personal data indicator that indicates whether the attribute is a personal data attribute, and the personal data indicators are used to perform a data filtering operation with respect to one or more of the attributes in the process metadata.

Example 15 is a method comprising: accessing process metadata of an automated process associated with a process design application, the process metadata comprising a plurality of attributes; generating prompt data by adding, to the process metadata, an instruction comprising at least one request to classify the plurality of attributes according to a predetermined classification scheme; providing the prompt data to a machine learning model to obtain output comprising, for each of the plurality of attributes and based on the predetermined classification scheme, a classification result; and in response to obtaining the output from the machine learning model: storing the classification results in association with the automated process, and causing presentation of one or more of the classification results in a user interface.

In Example 16, the subject matter of Example 15 includes, wherein the at least one request to classify each of the plurality of attributes comprises a first request to identify whether each attribute is a personal data attribute, and the classification result for each attribute comprises a personal data indicator that indicates whether the attribute is a personal data attribute.

In Example 17, the subject matter of any of Examples 15-16 includes, wherein the at least one request to classify each of the plurality of attributes comprises a second request to identify a category of each attribute from among a plurality of candidate data categories, the classification result for each attribute comprising the category of the attribute as identified by the machine learning model.

Example 18 is a non-transitory computer-readable medium that stores instructions that, when executed by one or more processors, cause the one or more processors to perform operations comprising: accessing process metadata of an automated process associated with a process design application, the process metadata comprising a plurality of attributes; generating prompt data by adding, to the process metadata, an instruction comprising at least one request to classify the plurality of attributes according to a predetermined classification scheme; providing the prompt data to a machine learning model to obtain output comprising, for each of the plurality of attributes and based on the predetermined classification scheme, a classification result; and in response to obtaining the output from the machine learning model: storing the classification results in association with the automated process, and causing presentation of one or more of the classification results in a user interface.

In Example 19, the subject matter of Example 18 includes, wherein the at least one request to classify each of the plurality of attributes comprises a first request to identify whether each attribute is a personal data attribute, and the classification result for each attribute comprises a personal data indicator that indicates whether the attribute is a personal data attribute.

In Example 20, the subject matter of Examples 18-19 includes, wherein the at least one request to classify each of the plurality of attributes comprises a second request to identify a category of each attribute from among a plurality of candidate data categories, the classification result for each attribute comprising the category of the attribute as identified by the machine learning model.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

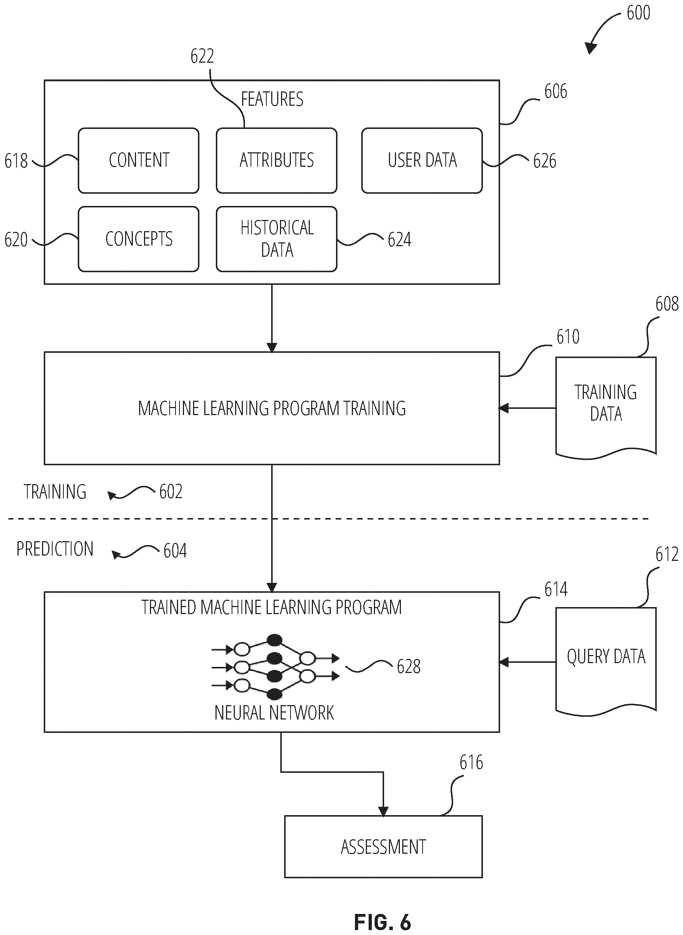

FIG. 6 is a block diagram showing a machine learning program 600, according to some examples. Machine learning programs, also referred to as machine learning algorithms or tools, may be used as part of the systems described herein to perform one or more operations, e.g., to identify relations between reported issues and context data, to identify contextual dependencies, to extract or infer additional issue metadata using initial issue metadata, to generate priority ratings, to generate estimated impacts, or combinations thereof.

Machine learning is a field of study that gives computers the ability to learn without being explicitly programmed. Machine learning explores the study and construction of algorithms, also referred to herein as tools, that may learn from or be trained using existing data and make predictions about or based on new data. Such machine learning tools operate by building a model from example training data 608 in order to make data-driven predictions or decisions expressed as outputs or assessments (e.g., assessment 616). Although examples are presented with respect to a few machine learning tools, the principles presented herein may be applied to other machine learning tools.

In some examples, different machine learning tools may be used. For example, Logistic Regression (LR), Naive-Bayes, Random Forest (RF), neural networks (NN), matrix factorization, and Support Vector Machines (SVM) tools may be used.

Two common types of problems in machine learning are classification problems and regression problems. Classification problems, also referred to as categorization problems, aim at classifying items into one of several category values (for example, is this object an apple or an orange?). Regression algorithms aim at quantifying some items (for example, by providing a value that is a real number).

The machine learning program 600 supports two types of phases, namely training phases 602 and prediction phases 604. In training phases 602, supervised, unsupervised or reinforcement learning may be used. For example, the machine learning program 600 (1) receives features 606 (e.g., as structured or labeled data in supervised learning) and/or (2) identifies features 606 (e.g., unstructured or unlabeled data for unsupervised learning) in training data 608. In prediction phases 604, the machine learning program 600 uses the features 606 for analyzing query data 612 to generate outcomes or predictions, as examples of an assessment 616.

In the training phase 602, feature engineering is used to identify features 606 and may include identifying informative, discriminating, and independent features for the effective operation of the machine learning program 600 in pattern recognition, classification, and regression. In some examples, the training data 608 includes labeled data, which is known data for pre-identified features 606 and one or more outcomes. Each of the features 606 may be a variable or attribute, such as individual measurable property of a process, article, system, or phenomenon represented by a data set (e.g., the training data 608). Features 606 may also be of different types, such as numeric features, strings, and graphs, and may include one or more of content 618, concepts 620, attributes 622, historical data 624 and/or user data 626, merely for example.

The concept of a feature in this context is related to that of an explanatory variable used in statistical techniques such as linear regression. Choosing informative, discriminating, and independent features is important for the effective operation of the machine learning program 600 in pattern recognition, classification, and regression. Features may be of different types, such as numeric features, strings, and graphs.

In training phases 602, the machine learning program 600 uses the training data 608 to find correlations among the features 606 that affect a predicted outcome or assessment 616.

With the training data 608 and the identified features 606, the machine learning program 600 is trained during the training phase 602 at machine learning program training 610. The machine learning program 600 appraises values of the features 606 as they correlate to the training data 608. The result of the training is the trained machine learning program 614 (e.g., a trained or learned model).

Further, the training phases 602 may involve machine learning, in which the training data 608 is structured (e.g., labeled during preprocessing operations), and the trained machine learning program 614 implements a relatively simple neural network 628 capable of performing, for example, classification and clustering operations. In other examples, the training phase 602 may involve deep learning, in which the training data 608 is unstructured, and the trained machine learning program 614 implements a deep neural network 628 that is able to perform both feature extraction and classification/clustering operations.

A neural network 628 generated during the training phase 602, and implemented within the trained machine learning program 614, may include a hierarchical (e.g., layered) organization of neurons. For example, neurons (or nodes) may be arranged hierarchically into a number of layers, including an input layer, an output layer, and multiple hidden layers. Each of the layers within the neural network 628 can have one or many neurons and each of these neurons operationally computes a small function (e.g., activation function). For example, if an activation function generates a result that transgresses a particular threshold, an output may be communicated from that neuron (e.g., transmitting neuron) to a connected neuron (e.g., receiving neuron) in successive layers. Connections between neurons also have associated weights, which defines the influence of the input from a transmitting neuron to a receiving neuron.

In some examples, the neural network 628 may also be one of a number of different types of neural networks, including a single-layer feed-forward network, an Artificial Neural Network (ANN), a Recurrent Neural Network (RNN), a symmetrically connected neural network, and unsupervised pre-trained network, a transformer network, a Convolutional Neural Network (CNN), or a Recursive Neural Network (RNN), merely for example.

During prediction phases 604, the trained machine learning program 614 is used to perform an assessment. Query data 612 is provided as an input to the trained machine learning program 614, and the trained machine learning program 614 generates the assessment 616 as output, responsive to receipt of the query data 612.

In some examples, the trained machine learning program 614 may be a generative AI model. Generative AIis a term that may refer to any type of AI that can create new content. For example, generative AI can produce text, images, video, audio, code, or synthetic data. In some examples, the generated content may be similar to the original data, but not identical.

Transformer models may use attention mechanisms to learn the relationships between different parts of input data (such as words or pixels) and generate output data based on these relationships. Transformer models can handle sequential data, such as text or speech, as well as non-sequential data, such as images or code. For example, a generative AI model, such as the LLM 118 of FIG. 1, may be a transformer model, or may be based on a transformer model.

In generative AI examples, the assessment 616 generated as a response or output by the trained machine learning program 614 may include predictions, translations, summaries, answers to questions, suggestions, media content, or combinations thereof. For example, the LLM 118 of FIG. 1 may generate natural language responses or responses in a requested format (e.g., JSON object structure format).

In some examples, a machine learning model may be fine-tuned. The term "fine-tuning," as used herein, generally refers to a process of adapting a pre-trained machine learning model. For example, a machine learning model may be adapted to improve its performance on a specific task or to make it more suitable for a specific operation. Fine-tuning techniques may include one or more of updating or changing a pre-trained model's internal parameters through additional training, injecting new trainable weights or layers into the model architecture and training on those weights or layers, modifying a model topology by altering layers or connections, changing aspects of the training process (such as loss functions or optimization methods), or any other adaptations that may, for example, result in better model performance on a particular task compared to the pre-trained model. For example, the LLM 118 may be fine-tuned using training data that includes process metadata and corresponding classification results to improve its performance on dealing with classification tasks in the context of process design applications.

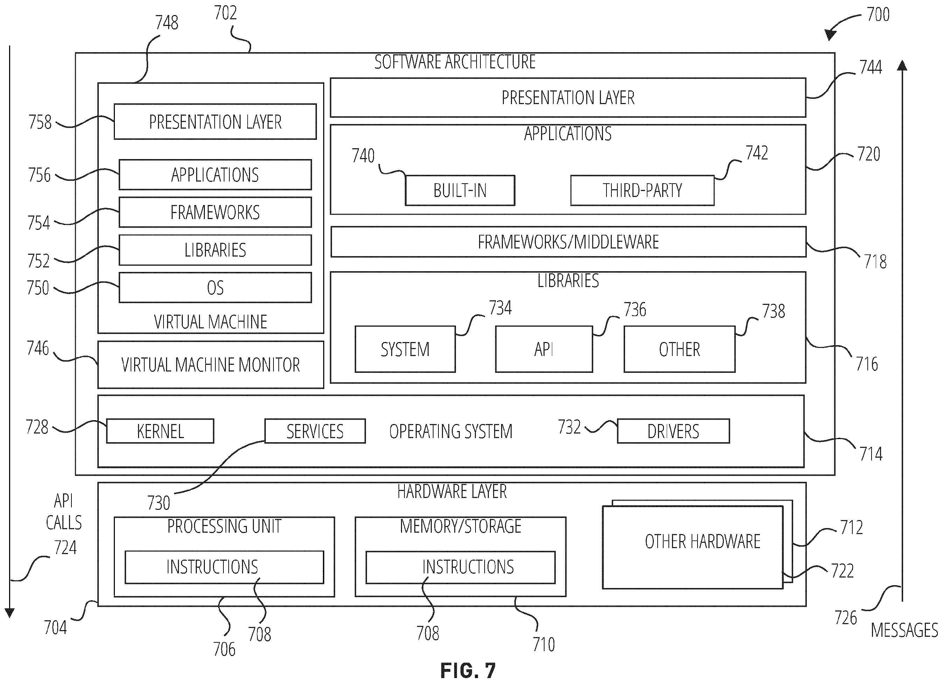

FIG. 7 is a block diagram 700 showing a software architecture 702 for a computing device, according to some examples. The software architecture 702 may be used in conjunction with various hardware architectures, for example, as described herein. FIG. 7 is merely a non-limiting illustration of a software architecture, and many other architectures may be implemented to facilitate the functionality described herein. A representative hardware layer 704 is illustrated and can represent, for example, any of the above referenced computing devices. In some examples, the hardware layer 704 may be implemented according to the architecture of the computer system of FIG. 8.

The representative hardware layer 704 comprises one or more processing units 706 having associated executable instructions 708. Executable instructions 708 represent the executable instructions of the software architecture 702, including implementation of the methods, modules, subsystems, and components, and so forth described herein and may also include memory and/or storage modules 710, which also have executable instructions 708. Hardware layer 704 may also comprise other hardware as indicated by other hardware 712 and other hardware 722 which represent any other hardware of the hardware layer 704, such as the other hardware illustrated as part of the software architecture 702.

In the architecture of FIG. 7, the software architecture 702 may be conceptualized as a stack of layers where each layer provides particular functionality. For example, the software architecture 702 may include layers such as an operating system 714, libraries 716, frameworks/middleware layer 718, applications 720, and presentation layer 744. Operationally, the applications 720 or other components within the layers may invoke API calls 724 through the software stack and access a response, returned values, and so forth illustrated as messages 726 in response to the API calls 724. The layers illustrated are representative in nature and not all software architectures have all layers. For example, some mobile or special purpose operating systems may not provide a frameworks/middleware layer 718, while others may provide such a layer. Other software architectures may include additional or different layers.

The operating system 714 may manage hardware resources and provide common services. The operating system 714 may include, for example, a kernel 728, services 730, and drivers 732. The kernel 728 may act as an abstraction layer between the hardware and the other software layers. For example, the kernel 728 may be responsible for memory management, processor management (e.g., scheduling), component management, networking, security settings, and so on. The services 730 may provide other common services for the other software layers. In some examples, the services 730 include an interrupt service. The interrupt service may detect the receipt of an interrupt and, in response, cause the software architecture 702 to pause its current processing and execute an interrupt service routine (ISR) when an interrupt is accessed.

The drivers 732 may be responsible for controlling or interfacing with the underlying hardware. For instance, the drivers 732 may include display drivers, camera drivers, Bluetooth^{®} drivers, flash memory drivers, serial communication drivers (e.g., Universal Serial Bus (USB) drivers), Wi-Fi^{®} drivers, near-field communication (NFC) drivers, audio drivers, power management drivers, and so forth depending on the hardware configuration.

The libraries 716 may provide a common infrastructure that may be utilized by the applications 720 or other components or layers. The libraries 716 typically provide functionality that allows other software modules to perform tasks in an easier fashion than to interface directly with the underlying operating system 714 functionality (e.g., kernel 728, services 730 or drivers 732). The libraries 716 may include system libraries 734 (e.g., C standard library) that may provide functions such as memory allocation functions, string manipulation functions, mathematic functions, and the like. In addition, the libraries 716 may include API libraries 736 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 716 may also include a wide variety of other libraries 738 to provide many other APIs to the applications 720 and other software components/modules.

The frameworks/middleware layer 718 may provide a higher-level common infrastructure that may be utilized by the applications 720 or other software components/modules. For example, the frameworks/middleware layer 718 may provide various graphic user interface (GUI) functions, high-level resource management, high-level location services, and so forth. The frameworks/middleware layer 718 may provide a broad spectrum of other APIs that may be utilized by the applications 720 or other software components/modules, some of which may be specific to a particular operating system or platform.

The applications 720 include built-in applications 740 or third-party applications 742. Examples of representative built-in applications 740 may include, but are not limited to, a contacts application, a browser application, a book reader application, a location application, a media application, a messaging application, or a game application. Third-party applications 742 may include any of the built-in applications as well as a broad assortment of other applications. In a specific example, the third-party application 742 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 742 may invoke the API calls 724 provided by the mobile operating system such as operating system 714 to facilitate functionality described herein.

The applications 720 may utilize built in operating system functions (e.g., kernel 728, services 730 or drivers 732), libraries (e.g., system libraries 734, API libraries 736, and other libraries 738), and frameworks/middleware layer 718 to create user interfaces to interact with users of the system. Alternatively, or additionally, in some systems, interactions with a user may occur through a presentation layer, such as presentation layer 744. In these systems, the application/module "logic" can be separated from the aspects of the application/module that interact with a user.

Some software architectures utilize virtual machines. In the example of FIG. 7, this is illustrated by virtual machine 748. A virtual machine creates a software environment where applications/modules can execute as if they were executing on a hardware computing device. A virtual machine is hosted by a host operating system (operating system 714) and typically, although not always, has a virtual machine monitor 746, which manages the operation of the virtual machine as well as the interface with the host operating system (e.g., operating system 714). A software architecture executes within the virtual machine 748 such as an operating system 750, libraries 752, frameworks/middleware 754, applications 756 or presentation layer 758. These layers of software architecture executing within the virtual machine 748 can be the same as corresponding layers previously described or may be different.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In examples, operations may be performed by one or more programmable processors executing a computer program to perform functions by operating on input data and generating output. Method operations can also be performed by, and apparatus of some examples may be implemented as, special purpose logic circuitry, e.g., a field programmable gate array (FPGA) or an application-specific integrated circuit (ASIC).

FIG. 8 is a block diagram of a machine in the example form of a computer system 800 within which instructions 824 may be executed for causing the machine to perform any one or more of the methodologies discussed herein. In alternative examples, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processor 802 (e.g., a central processing unit (CPU), a GPU, or both), a primary or main memory 804, and a static memory 806, which communicate with each other via a bus 808. The computer system 800 may further include a video display unit 810 (e.g., a liquid crystal display (LCD) or a cathode ray tube (CRT)). The computer system 800 also includes an alphanumeric input device 812 (e.g., a keyboard or a touch-sensitive display screen), a UI navigation (or cursor control) device 814 (e.g., a mouse), a storage unit 816, a signal generation device 818 (e.g., a speaker), and a network interface device 820.

As used herein, the term "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The storage unit 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804 or within the processor 802 during execution thereof by the computer system 800, with the main memory 804 and the processor 802 also each constituting a machine-readable medium 822.

While the machine-readable medium 822 is shown in accordance with some examples to be a single medium, the term "machine-readable medium" may include a single medium or multiple media (e.g., a centralized or distributed database, or associated caches and servers) that store the one or more instructions 824 or data structures. The term "machine-readable medium" shall also be taken to include any tangible medium that is capable of storing, encoding, or carrying instructions 824 for execution by the machine and that cause the machine to perform any one or more of the methodologies of the present disclosure, or that is capable of storing, encoding, or carrying data structures utilized by or associated with such instructions 824. The term "machine-readable medium" shall accordingly be taken to include, but not be limited to, solid-state memories, and optical and magnetic media. Specific examples of a machine-readable medium 822 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM) disks. A machine-readable medium is not a transmission medium.

The instructions 824 may further be transmitted or received over a communications network 826 using a transmission medium. The instructions 824 may be transmitted using the network interface device 820 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., Wi-Fi and Wi-Max networks). The term "transmission medium" shall be taken to include any intangible medium that is capable of storing, encoding, or carrying instructions 824 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This detailed description, therefore, is not to be taken in a limiting sense, and the scope of various examples is defined only by the appended claims, along with the full range of equivalents to which such claims are entitled. Such examples of the inventive subject matter may be referred to herein, individually or collectively, by the term "example" merely for convenience and without intending to voluntarily limit the scope of this application to any single example or concept if more than one is in fact disclosed.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance.

Unless the context clearly requires otherwise, throughout the description and the claims, the words "comprise," "comprising," and the like are to be construed in an inclusive sense, as opposed to an exclusive or exhaustive sense, e.g., in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words using the singular or plural number may also include the plural or singular number, respectively. The word "or" in reference to a list of two or more items, covers all of the following interpretations of the word: any one of the items in the list, all of the items in the list, and any combination of the items in the list.

Although some examples, e.g., those depicted in the drawings, include a particular sequence of operations, the sequence may be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence. The term "operation" is used to refer to elements in the drawings of this disclosure for ease of reference and it will be appreciated that each "operation" may identify one or more operations, processes, actions, or steps, and may be performed by one or multiple components.

## Claims

1. A method comprising:
accessing process metadata of an automated process associated with a process design application, the process metadata comprising a plurality of attributes;
generating prompt data by adding, to the process metadata, an instruction comprising at least one request to classify the plurality of attributes according to a predetermined classification scheme;
providing the prompt data to a machine learning model to obtain output comprising, for each of the plurality of attributes and based on the predetermined classification scheme, a classification result; and
in response to obtaining the output from the machine learning model:
storing the classification results in association with the automated process, and causing presentation of one or more of the classification results in a user interface.

2. The method of claim 1, wherein the at least one request to classify each of the plurality of attributes comprises a first request to identify whether each attribute is a personal data attribute, and the classification result for each attribute comprises a personal data indicator that indicates whether the attribute is a personal data attribute.

3. The method of claim 2, further comprising:
performing a data enrichment operation to add one or more of the personal data indicators to the process metadata.

4. The method of claim 2 or 3, wherein the machine learning model is a first machine learning model, the method further comprising:
accessing a first data set comprising the plurality of attributes of the automated process;
identifying, in the first data set, a target attribute from among the plurality of attributes, wherein the personal data indicator corresponding to the target attribute indicates that the target attribute is a personal data attribute;
performing a data filtering operation to remove the target attribute from the first data set to obtain a second data set, the second data set being a training data set for a second machine learning model; and
training the second machine learning model on the training data set.

5. The method of claim 1, wherein the at least one request to classify each of the plurality of attributes comprises a second request to identify a category of each attribute from among a plurality of candidate data categories, the classification result for each attribute comprising the category of the attribute as identified by the machine learning model.

6. The method of claim 5, wherein the machine learning model is a first machine learning model, the method further comprising:
accessing a first data set comprising the plurality of attributes of the automated process;
performing a data enrichment operation to add the categories identified by the first machine learning model to the first data set to obtain a second data set, the second data set being a training data set for a second machine learning model; and
training the second machine learning model on the training data set.

7. The method of claim 6, wherein the at least one request to classify each of the plurality of attributes further comprises a first request to identify whether each attribute is a personal data attribute, the classification result for each attribute comprises a personal data indicator that indicates whether the attribute is a personal data attribute, the method further comprising:
identifying, in the first data set, a target attribute from among the plurality of attributes, wherein the personal data indicator corresponding to the target attribute indicates that the target attribute is a personal data attribute; and
performing a data filtering operation to remove the target attribute from the first data set such that the training data set does not include the target attribute.

8. The method of claim any one of claims 5 to 7, wherein the candidate data categories are included in the prompt data, the candidate data categories comprising at least one of: numerical, text, categorical, or date.

9. The method of any one of the preceding claims, wherein the user interface is a graphical user interface of the process design application, the method further comprising:
receiving, via the user interface, the process metadata from a user device associated with a user of the process design application;
causing presentation, in the user interface, of a classification adjustment element in association with the classification result obtained for a first attribute from among the plurality of attributes;
detecting user selection of the classification adjustment element; and
adjusting the classification result obtained for the first attribute based on the user selection of the classification adjustment element.

10. The method of claim 9, further comprising:
receiving, via the user interface, an additional user selection of a replacement classification for the first attribute, wherein the classification result obtained for the first attribute is adjusted by replacing the classification result with the replacement classification.

11. The method of any one of the preceding claims, wherein the instruction identifies a data structure for returning the classification results, the output being structured according to the identified data structure, and the method further comprising:
providing the process design application with programmatic access to the output to integrate the classification results into the process metadata of the automated process.

12. The method of claim 11, wherein the at least one request to classify each of the plurality of attributes comprises a first request to identify whether each attribute is a personal data attribute, the classification result for each attribute comprises a personal data indicator that indicates whether the attribute is a personal data attribute, and the personal data indicators are integrated into the process metadata of the automated process; or
wherein the at least one request to classify each of the plurality of attributes comprises a first request to identify whether each attribute is a personal data attribute, the classification result for each attribute comprises a personal data indicator that indicates whether the attribute is a personal data attribute, and the personal data indicators are used to perform a data filtering operation with respect to one or more of the attributes in the process metadata.

13. The method of claim any one of the preceding claims, wherein the process metadata comprises, for each of the plurality of attributes, an attribute name and an attribute data type.

14. A system comprising:
at least one memory that stores instructions; and
one or more processors configured by the instructions to perform operations according to the method of any one of claims 1 to 13.

15. A non-transitory computer-readable medium that stores instructions that, when executed by one or more processors, cause the one or more processors to perform operations according to the method of any one of claims 1 to 13.
